# EUROPEAN PATENT APPLICATION

(11) **EP 2 639 568 A1**
(43) Date of publication of application: **18.09.2013**
(21) Application number: 12159869.2
(22) Date of filing: 16.03.2012
(51) Int. Cl.: G01N 1/38, G01N 23/225

(54) **Observation method by TEM or SEM and specimen for use therein**

(71) Applicant: Stichting Dutch Polymer Institute, 5612 AB Eindhoven (NL)
(72) Inventor: The designation of the inventor has not yet been filed
(74) Representative: Renkema, Jaap

(57) **Abstract**

The invention relates to a method for observing a specimen by a TEM or a SEM, wherein the specimen comprises an ionic liquid comprising a macromolecule and the TEM or the SEM comprises a temperature-controllable specimen holder, the method comprising the steps of:
- providing the specimen in the specimen holder and
- controlling the temperature of the temperature-controllable specimen holder to a first temperature at which the ionic liquid of the specimen is in a liquid state and the macromolecule moves and
- observing the specimen at the first temperature.

## Description

The present invention relates to a method for observing a specimen by a transmission electron microscope (TEM) or a scanning electron microscope (SEM). The present invention also relates to a specimen for use in such a method.

Dynamic processes on the nanometer scale are important phenomena in liquids and fluids. Examples include processes in biological systems, transport phenomena for drug delivery, and the assembly of synthetic molecules into supramolecular structures, among many other issues. The investigation of these processes in liquids is restricted by a number of experimental difficulties, which make a direct observation of the dynamics on the level of individual nano-objects challenging. Most studies apply NMR spectroscopy and scattering techniques, *i.e.* static and dynamic light scattering (SLS and DLS), small angle and wide-angle x-ray scattering (SAXS and WAXS) and small angle neutron scattering (SANS). However, these techniques only provide average information concerning a number of structures and, thus, allow only statistical insight into dynamic processes of nano-objects.

Supramolecular assembly is a defined complex of molecules held together by noncovalent bonds, for example in a vesicle (*e.g.* liposome) or a micelle. Certain macromolecules, particularly certain block copolymers, can form supramolecular assemblies. The fundamental understanding of self-organization processes and structural transitions of supramolecular aggregates in liquid media plays an important role for many research areas. These include, *e.g.*, the fabrication of defined vesicle or liposome systems, the investigation of transition processes between metastable molecular aggregates, vesicle fusion and fission processes and drug delivery, among others.

While imaging techniques such as transmission electron microscopy (TEM) can provide access to information on individual nanostructures, preparations are involved that prohibit a direct investigation of the systems in their liquid environment. As a consequence, the system is affected by the film thickness, the presence of surfaces or drying effects, which limit the possibilities for unperturbed investigations of dynamic processes with high spatial resolution.

Cryo-TEM is regarded as the method of choice to investigate individual systems in a solution-like state. However, the required vitrification of the solution makes an investigation of dynamic processes impossible: Images represent only 'snapshots' of the state of the liquid sample in the moment of vitrification.

Recent attempts to overcome the limitation that no dynamic processes can be investigated include the fabrication of tailor-made 'sandwich' TEM cells, where a thin water layer is vacuum-tight sealed by two electron transparent dielectric membranes, as described in de Jonge et al., PNAS 2009, 106, 2159-2164. Due to the dielectric materials utilized in their construction, Scanning Transmission Electron Microscopy (STEM) studies are mostly required. Furthermore, these cells are expensive and do not allow tomography.

These restrictions, which are mainly based on the requirement of ultra-high vacuum (UHV) conditions for TEM operation, represent one of the major limitations on the high resolution investigation of dynamics of individual nanostructures.

For example, Simone et.al, Macromol. Chem. Phys. 2007, 208, 339-348 discloses cryo-TEM for observing supramolecular structures. In this publication, the structure of several self-aggregated polymer nanostructures formed in ionic liquids is demonstrated. The authors investigated these structures in ionic liquids under cryo-TEM conditions, thus utilizing vitrified ionic liquid films.

US2011 /0057100 mentions a method for observing a specimen by TEM, comprising a step of introducing an ionic liquid having the specimen dispersed therein into a specimen-holding member at the tip portion of a specimen holder for introducing the specimen to the specimen chamber, a step of applying an electron beam to the ionic liquid, and a step of observing a specimen image formed based on the electron beam transmitted through the specimen. In one embodiment, a voltage is applied to the ionic liquid and the specimen in the ionic liquid is moved or changed in shape by voltage application.

It is an object of the present invention to provide a method for observing a specimen by a TEM or a SEM, in which the above-mentioned and/or other disadvantages are reduced.

Accordingly, the present invention provides a method for observing a specimen by a TEM or a SEM, wherein the specimen comprises an ionic liquid comprising a macromolecule and the TEM or SEM comprises a temperature-controllable specimen holder, the method comprising the steps of:
- providing the specimen in the specimen holder and
- controlling the temperature of the temperature-controllable specimen holder to a first temperature at which the ionic liquid of the specimen is in a liquid state and the macromolecule moves and
- observing the movement of macromolecule in the specimen at the first temperature.

The TEM or SEM used in the method according to the present invention comprises a temperature-controllable specimen holder. The temperature-controllable specimen holder is controlled to have a first temperature. The first temperature is chosen to be a temperature at which the macromolecule moves in the ionic liquid which is in a liquid state.

As used herein, the term "movement of the macromolecule" is understood to mean the change in the location of the macromolecules such as Brownian motion, diffusion, convection as well as the formation and dissociation of a supramolecular assembly of the macromolecules, the changes in the forms of the supramolecular assembly of the macromolecules and the fusion and fission of the supramolecular assemblies of the macromolecules.

As used herein, the term "ionic liquid" is understood to mean an organic salt that is mainly composed of organic cations and inorganic or organic anions, which is liquid below 100 °C. Many of them are already liquid at room temperature. About 1000 ionic liquids are described in the literature, and approximately 300 are commercially available.

As used herein, the term "macromolecule" is understood to mean a molecule composed of two or more monomeric subunits, or derivatives thereof, which are linked by *e.g.* a covalent and/or a noncovalent bond.

As used herein, the term "macromolecule" includes a synthetic polymer and a biopolymer.

As used herein, the term "synthetic polymer" is defined as a human-synthesized polymer excluding human-synthesized biopolymers.

The synthetic polymer may be a homopolymer or a copolymer. The copolymer may be, *e.g.*, a block, gradient, statistical, alternating copolymer, star copolymer, dendrimers or comb copolymer. Block copolymer may be diblock, triblock, tetrablock or any other multiblock copolymers.

Examples of the synthetic polymer include polystyrene, poly(2-vinylpyridine), poly(ethylene oxide), poly(methacrylates), poly(acrylates), glycopolymers, polyethylenimides, polyoxazoline and poly(N-isopropylamide) and their copolymer. Particularly preferred examples of the block copolymer include diblock copolymers having a block of polystyrene and a block of poly(2-vinylpyridine), poly(ethylene oxide), poly(metacrylates), poly(acrylates), glycopolymers, polyethylenimides, polyoxazoline or poly(N-isopropylamide).

As used herein, the term "biopolymer" is defined as a polymer produced by living organisms or human-synthesized analogues of those in which the monomer units are sugars, amino acids, and nucleic acids. Examples of biopolymers include a polynucleotide, a nucleic acid molecules including DNA, RNA and peptide nucleic acid (PNA), a polypeptide, a protein, a carbohydrate, or a lipid, or derivatives or combinations thereof, for example, a nucleic acid molecule containing a peptide nucleic acid portion or a glycoprotein, respectively.

According to the method of the present invention, the movement of the macromolecule induced by the temperature is directly observed.

The macromolecule may also be used as a marker for the investigation of the dynamic/fluidic behavior of the ionic liquid comprising the macromolecule.

It was found that the ionic liquids have a number of advantages which make them suitable liquid media for use in TEM or SEM observation of a macromolecule.

According to the present invention, the macromolecule is embedded in an ionic liquid in a liquid state and thus can be investigated in a dynamic state, in contrast to frozen samples or samples immobilized on support materials by drying and which are not in a dynamic state anymore. The movement of the macromolecule can be directly observed.

The specimen according to the present invention further allows a time and cost efficient preparation, unlike a specimen for cryo-TEM which requires a long time for the preparation. Furthermore, expensive liquid cells are not required in the present invention.

The low vapor pressure of the ionic liquids provides compatibility to high vacuum conditions required for TEM or SEM. Furthermore, their conductivity limits charging effects of the specimen due to the electron beam during TEM or SEM observation. These properties make the specimen according to the present invention significantly more stable than the cryo-TEM specimen. A larger series of images can be acquired by TEM or SEM before films or macromolecules are degenerated. The TEM or SEM specimen according to the present invention is stable for relative high electron doses compared to cryoTEM.

The presence of anions of the ionic liquids with high electron density also accounts for an intrinsic staining of the samples. Thus, ionic liquids are less electron transparent than the macromolecule and an intrinsic negative staining of the ionic liquid is achieved. This intrinsic staining represents an important advantage compared to classical cryo-TEM investigations, where a rather poor contrast is generated due to the presence of the vitrified ice film.

The combination of the use of the ionic liquid and the temperature control advantageously allows dynamic observation of the movements of the macromolecules.

The method of the present invention is particularly advantageous to observe temperature-responsive macromolecules. For example, some temperature-responsive macromolecules form a supramolecular assembly depending on the temperature. Accordingly, in some preferred embodiments, the macromolecule is of a type which forms a supramolecular assembly. Preferably, a supramolecular assembly of the macromolecules is present at the first temperature. This allows in-situ observation of various changes in the supramolecular assembly, for example the formation and dissociation of a supramolecular assembly of the macromolecules, the changes in the forms of the supramolecular assembly of the macromolecules and the fusion and fission of the supramolecular assemblies of the macromolecules.

The observation may be performed at more than one temperature within a temperature range in which the ionic liquid of the specimen is in a liquid state. Accordingly, in some preferred embodiments, the method of the present invention further comprises the step of controlling the temperature of the temperature-controllable specimen holder to a second temperature at which the ionic liquid of the specimen is in a liquid state and observing the specimen at the second temperature, the second temperature being different from the first temperature.

The change in the observation temperature allows direct observation of the temperature responsiveness of the macromolecule. The change of the velocity of the movements of the macromolecule in response to the temperature may be observed. At the second temperature, the macromolecule may move or may not move. Various temperature-dependent changes in the supramolecular assembly may also be observed, when the macromolecule is of the type which forms a supramolecular assembly.

In some embodiments, the supramolecular assembly is present at the first temperature and the supramolecular assembly is not present at the second temperature, or the supramolecular assembly is present at the second temperature and the supramolecular assembly is not present at the first temperature.

In some embodiments the supramolecular assembly has a defined state at the first temperature, which is different from its state at the second temperature.

It will be appreciated that the observation may be performed at more than two temperatures according to the method of the present invention. For example, the observation may be performed either at distinct temperatures or while continuously changing the temperature. The temperature of the temperature-controllable specimen holder may be increased or decreased during observation.

It is advantageous to control the temperature of the temperature controllable specimen holder between the first temperature and the second temperature during a continuous observation of the specimen. This allows observation of the specimen in response to the continuous change in the temperature. The same area in the same specimen may be observed while the temperature is changed.

The second temperature may be higher or lower than the first temperature. For example, the second temperature may be at least 5 °C higher or lower than the first temperature. The large enough difference between the first temperature and the second temperature allows clear observation of the response of the macromolecule to the temperature. The second temperature may be at least 10 °C, 15 °C, 20 °C, 50 °C, or 100 °C higher or lower than the first temperature.

Preferably, the macromolecule comprises at least two regions having different solubilities to the ionic liquid. Preferably, the macromolecule comprises one region which is soluble in the ionic liquid and another region which is insoluble in the ionic liquid at a certain temperature, preferably at the first temperature and/or the second temperature. The solubilities change depending on the temperature and thus the forms of the macromolecule change depending on the temperature.

Large range of temperature stability without evaporation of the support film and impairing the UHV conditions allows the samples to be investigated *in-situ* at a large range of temperatures. A typical temperature range in which the ionic liquid remains in a liquid state may be from -150 °C to 250 °C. The first temperature and the second temperature may be chosen from this temperature range.

For the observation of the dynamic movements of the macromolecules by TEM or SEM, the viscosity of the ionic liquid should be low enough for the movement of the macromolecules. Higher temperature lowers the viscosity of the ionic liquid and movements of the macromolecule are pronounced. The viscosities of different ionic liquids at different temperatures are known *e.g.* from J. Phys. Chem. Ref. Data 35, 1475 (2006). Accordingly, the first temperature is preferably at least 0 °C, at least 10 °C, at least 20 °C, at least 30 °C, at least 40 °C, at least 50 °C, at least 70 °C or at least 80 °C. The first temperature may be higher, e.g. at least 100 °C, at least 150 °C or at least 200 °C.

The macromolecule may lose its activity, lose its structure or degrade at a high temperature. Preferably, the first temperature is chosen to a temperature at which the macromolecule withstands. For this purpose, the first temperature may e.g. be less than 200 °C, less than 150 °C, less than 100 °C, less than 80 °C, less than 70 °C, less than 50 °C, less than 40 °C, less than 40 °C, less than 30 °C, less than 20 °C or less than 10 °C.

In a particularly preferred embodiment, the first temperature is 20 °C to 100 °C.

In the cases where the macromolecule is a biomolecule, the biomolecule may lose its activity or lose its structure when the temperature is too high. Accordingly, in some embodiments, the macromolecule is a biomolecule and the first temperature is less than 100 °C, less than 80 °C, less than 70 °C. More preferably, the first temperature is less than 50 °C, or even more preferably less than 40 °C.

In some embodiments, the macromolecule is a synthetic polymer and the first temperature is at least 50 °C. More preferably, the first temperature is at least 60 °C, at least 70 °C or at least 80 °C. The first temperature may be higher, e.g. at least 100 °C, at least 150 °C or at least 200 °C.

The acceleration voltage of the electrons of the TEM are preferably within a range of 20 to 300 kV, more preferably 80 to 200 kV. It was found that high electron doses may result in an inhibition of the movement of the macromolecules. Relatively low electron doses were found to be suitable for observing the movement without inhibiting the movement of the macromolecules.

As described above, the macromolecule preferably comprises one region which is soluble in the ionic liquid and another region which is insoluble in the ionic liquid, i.e. the ionic liquid used in the present invention is preferably chosen to allow this for the chosen macromolecule. The large availability of the ionic liquids allows suitable systems to be found for most macromolecules. Properties of the ionic liquid, *e.g.* viscosity, polarity, hydrophobicity, melting/freezing point etc., can be tuned in a wide range by choosing a distinct cation/anion pair. The solubility of the macromolecule in the ionic liquid can also change depending on various parameters such as pH, temperature, light, redox reactions. Differences in the solubility alter the structure of the supramolecular aggregation.

Examples of the cation of the ionic liquid include imidazolium, pyridinium, pyrrolidinium, phosphonium, ammonium and sulfonium. Examples of the organic anions of the ionic liquid include alkyl sulfates, tosylates and methanesulfonates. Examples of the inorganic anions of the ionic liquid include bis(trifluoromethylsulfonyl)imide, hexafluorophosphate, tetrafluoroborate and halides.

Examples of suitable ionic liquids include
1-Ethyl-3-methylimidazolium bis(trifluoromethylsulfonyl)imide
1-Ethyl-3-methylimidazolium dicyanamide
1-Ethyl-3-methylimidazolium ethyl sulfate
1-Ethyl-3-methylimidazolium diethyl phosphate
1-Ethyl-3-methylimidazolium tetrafluoroborate
1-Ethyl-3-methylimidazolium triflate
1-Butyl-3-methylimidazolium hexafluorophosphate
1-Butyl-3-methylimidazolium tetrafluoroborate
1-Butyl-3-methylimidazolium triflate
1-Butyl-3-methylimidazolium bis(trifluoromethylsulfonyl)imide
1-Butyl-3-methylimidazolium iodide
1-Butylpyridinium bis(trifluoromethylsulfonyl)imide
1-Butyl-1-methylpyrrolidinium bis(trifluoromethylsulfonyl)imide
Trihexyltetradecylphosphonium bis(trifluoromethylsulfonyl)imide
Methyltrioctylammonium bis(trifluoromethylsulfonyl)imide
Triethylsulfonium bis(trifluoromethylsulfonyl)imide

For the strong staining effects, particularly preferred are the ionic liquids containing anions with high electron density, *e.g.*, I-, PF₆⁻ and EtOSO₃⁻.

Preferably, the specimen comprising the ionic liquid comprising the macromolecule is prepared outside of the TEM or SEM and then subsequently placed in the specimen holder.

For example, the TEM specimen according to the present invention may be prepared by providing an ionic liquid comprising macromolecules on a TEM grid and blotting the TEM grid.

Preferably, the specimen is observed by a TEM. This allows a higher resolution.

In some embodiments of the TEM method, the ionic liquid is a free-standing liquid film. This is made available by the fact that the ionic liquids have a characteristic surface tension and a high viscosity. This allows the formation of free-standing liquid films showing a high stability. As used herein, the term 'free-standing film' is herein meant to be a film that is span in the holes of a TEM grid. Free-standing liquid films have a distinct advantage that the behavior of the macromolecule is not affected by the surface of a support substrate.

A free-standing liquid film is prepared directly onto a TEM grid. The TEM grid may e.g. be open mesh or lacey carbon coated or holey carbon coated grids with bars made of copper, nickel or gold. Particularly suitable TEM grids have holes of 100 nm up to 25 µm. Depending on the viscosity of the ionic liquid, the grids which have holes of up to 25 µm may be used for preparing a free-standing liquid film.

The TEM specimen according to the present invention may be prepared by providing an ionic liquid comprising macromolecules on a TEM grid and blotting the TEM grid. The thickness of the liquid film can be adjusted by (i) the size of the holes of the noncontinuous support material, (ii) the viscosity and/or the surface tension of the ionic liquids as well as (iii) the blotting time and (iv) the blotting temperature. The blotting times may be in the range of tens of seconds.

Preferably, the film has a adjustable thickness of 200 to 2000 nm. The films having a thickness in this range are thin enough to provide a good contrast of the macromolecules within the support medium and are also thick enough to allow the investigation of motional processes.

A further aspect of the present invention provides a TEM or SEM specimen for use in the method according to the present invention.

A further aspect of the present invention provides use of a liquid film of an ionic liquid comprising macromolecules as a TEM or SEM specimen for the investigation of the movement of the macromolecules, including the formation and dissociation of a supramolecular assembly of the macromolecules, the changes in the forms of the supramolecular assembly of the macromolecules and/or the fusion and fission of the supramolecular assemblies of the macromolecules.

Further, use of macromolecules in a liquid film of an ionic liquid comprising the macromolecules as a marker for the investigation of the dynamic/fluidic behavior of the ionic liquid by TEM or SEM is provided according to the present invention.
Figure 1 shows an image of a free-standing liquid film of [EMIm][EtOS0_{3]} on lacey carbon coated copper grid;
Figure 2 shows an image of a free-standing liquid film of [EMIm][EtOS0_{3]} comprising a PS_{440K}-b-P2VP_{350K} diblock copolymer on lacey carbon-coated copper grid according to the present invention;
Figure 3 shows an image sequence of a free-standing liquid film of [EMIm][EtOS0_{3]} comprising PS_{440K}-*b*-P2VP_{350K} on lacey carbon coated copper grid according to the present invention.

The invention will be explained hereinafter referring to non-limiting examples.

### Examples

### Materials

1-Ethyl-3-methylimidazolium ethyl sulfate (99%) ([EMIm][EtOS0₃]) and 1-butyl-3-methylimidazolium tetrafluoroborate (99%) ([BMIm][BF₄]) were purchased from lolitec and were used without further purification. Poly(styrene-b-2-vinyl pyridine) (Mₙ[kg/mol] = PS₄₄₀-*b*-P*2*VP₃₅₃), PDI = 1.19) was purchased from Polymer Source. Poly(styrene-*b-*ethylene oxide) Mₙ[kg/mol] = PS₁₀₀ₖ-b-PE0₃₄ₖ was synthesized. The lacey carbon coated TEM copper grids (Mesh 400) were purchased from Agar Scientific and were plasma-cleaned, prior to use, for 1 minute. The TEM samples were examined on a Phillips CM-120 transmission electron microscope operated at 80 and 120 kV. Specimens were investigated on a cryogenic sample holder (Gatan 626-DH) at 20 °C up to 92 °C. Images were recorded with a bottom mounted 1 k x 1 k CCD camera (TVIPS).

### General preparation of polymeric assemblies in ionic liquids

For a stock solution, the polymer (10 mg) was dissolved in dichloromethane (DCM) (400 µL). The ionic liquid (40 µL) was slowly added to the diluted solution (20 µL of polymer solution and 100 µL DCM) and the DCM was subsequently evaporated at 60 °C while flushing the sample with air.

### Preparation of the free-standing liquid films

A small droplet of the ionic liquid solution was placed at ambient conditions onto a lacey carbon coated TEM grid that was subsequently blotted with a filter paper on both sides for several seconds. Remaining traces of the initial solvent were removed during the sample transfer process to the TEM in the pre-vacuum pumping cycle.

### Imaging conditions

For a movie an image sequence of 64 pictures was recorded (800 ms per picture with 300 ms acquisition time and 500 ms read-out time).

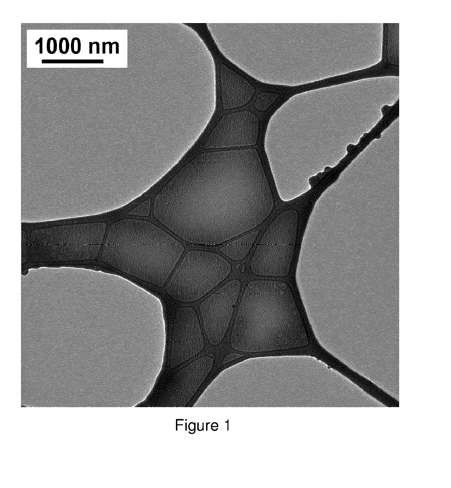

The obtained images are shown in Figures 1-3.

Figure 1 shows an image of a free-standing liquid film of [EMIm][EtOS0_{3]} on lacey carbon coated copper grid. Figure 1 shows an example of homogeneous, thin films that can be generated. These films span the net-like structures of the lacey carbon structures and are found to be stable under common TEM irradiation conditions.

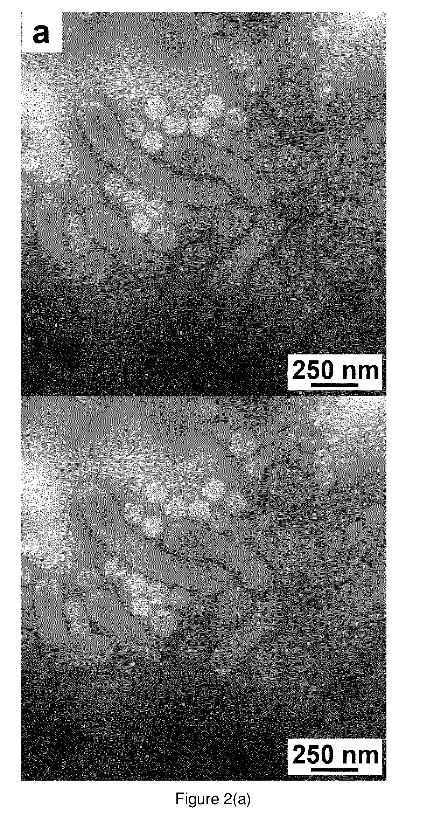

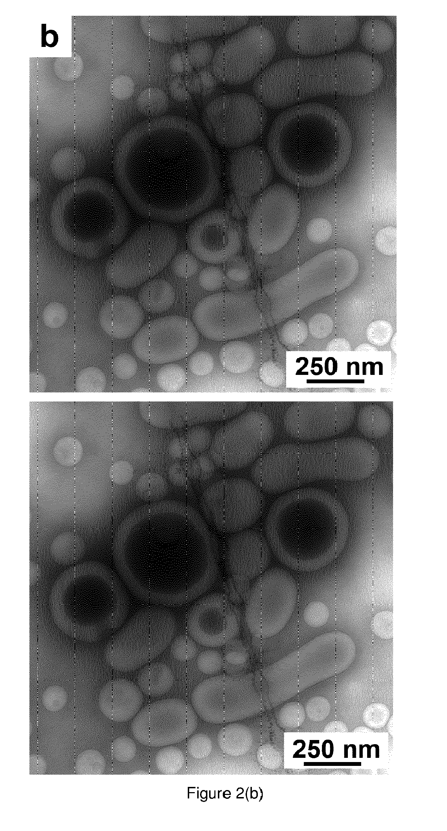

Figure 2 shows illustrative examples of vesicles and worm-like assemblies of P2VP_{35OK}-b-PS_{440K} in [EMIm][EtOS0_{3]} according to the present invention. The systems can be well resolved by TEM and a good contrast can be achieved. This is mainly due to the composition of the ionic liquids, containing anion EtOSO₃- which has a high electron density. The ionic liquid is less electron transparent than the polymer assemblies and an intrinsic negative staining of the samples is achieved. This intrinsic staining represents an important advantage compared to classical cryo-TEM investigations, where a rather poor contrast is generated due to the presence of the vitrified ice film. The stability of the free-standing film is another issue where ionic liquids provide improved performance, as the polymer assemblies can be imaged at relative high electron doses and also a large number of imaging processes can be applied with minor beam damage of the molecular structures in comparison to cryoTEM.

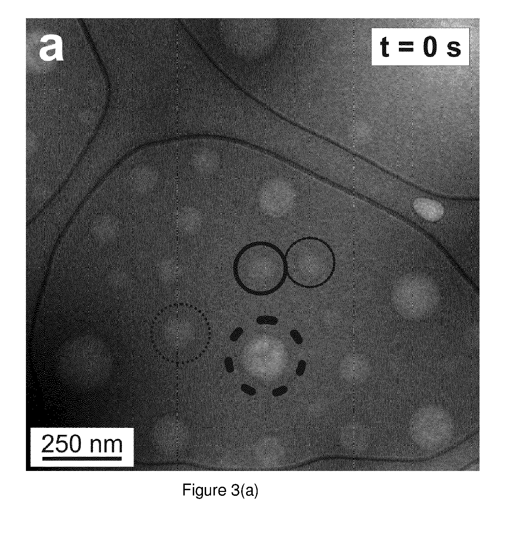

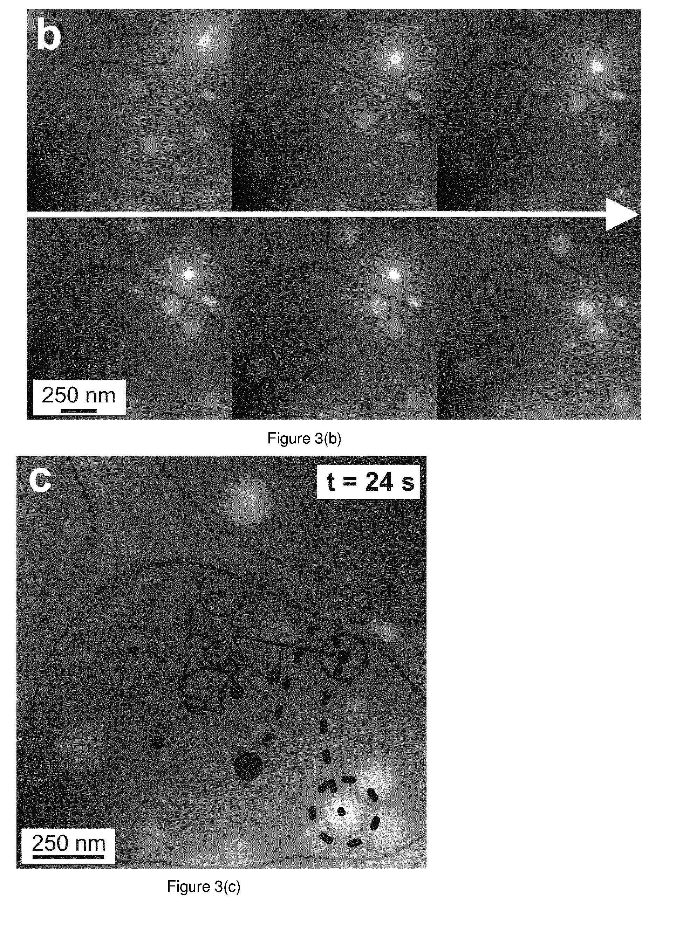

Figure 3 summarizes a sequence of images which were acquired with a recording time of 800 ms/frame, showing the movement of PS_{440K}-*b*-P2VP_{350K} vesicles in [EMIm][EtOS0_{3]} at 92 °C.

Figure 3(a) shows the initial positions of encircled vesicles; Figure 3(b) shows an image sequence in the interim and Figure 3(c) shows the later position of encircled vesicles and the related individual trajectories within 24 s. The encircled vesicles show movement in independent directions and exhibit different velocities.

Further, vesicles of PS_{100K}-*b*-PE0_{34K} in [BMIm][BF₄] were observed by TEM at 92 °C. Motions of individual vesicles were observed.

These examples show that macromolecules and assemblies thereof may be observed in motion on the nanometer scale by TEM.

## Claims

1. A method for observing a specimen by a TEM or a SEM, wherein the specimen comprises an ionic liquid comprising a macromolecule and the TEM or the SEM comprises a temperature-controllable specimen holder, the method comprising the steps of:
- providing the specimen in the specimen holder and
- controlling the temperature of the specimen holder to a first temperature at which the ionic liquid of the specimen is in a liquid state and the macromolecule moves and
- observing the specimen at the first temperature.

2. The method according to claim 1, further comprising the step of controlling the temperature of the temperature-controllable specimen holder to a second temperature at which the ionic liquid of the specimen is in a liquid state and observing the specimen at the second temperature, the second temperature being different from the first temperature.

3. The method according to claim 2, wherein the temperature of the temperature-controllable specimen holder is changed between the first temperature and the second temperature during a continuous observation of the specimen.

4. The method according to any one of the preceding claims, wherein the first temperature is 20 °C to 100 °C.

5. The method according to any one of the preceding claims, wherein the macromolecule is of a type which forms a supramolecular assembly in the ionic liquid.

6. The method according to any one of the preceding claims, wherein the macromolecule comprises at least two regions having different solubilities to the ionic liquid.

7. The method according to any one of the preceding claims, wherein the macromolecule is a synthetic polymer.

8. The method according to claim 7, wherein synthetic polymer is a copolymer, preferably chosen from the group consisting of diblock copolymers having a block of polystyrene and a block of poly(2-vinylpyridine), poly(ethylene oxide), poly(metacrylates), poly(acrylates), glycopolymers, polyethylenimides, polyoxazoline or poly(N-isopropylamide).

9. The method according to claim 7 or 8, wherein the first temperature is at least 50 °C.

10. The method according to any one of claims 1-6, wherein the macromolecule is a biopolymer.

11. The method according to claim 10, wherein the first temperature is less than 50 °C.

12. The method according to any one of the preceding claims, wherein the ionic liquid contains anions I-, PF₆⁻ or EtOSO₃⁻.

13. The TEM specimen for use in the method according to any one of claims 1-12.

14. Use of a liquid film of an ionic liquid comprising macromolecules as a TEM specimen or a SEM specimen for the investigation of the movement of the macromolecules.

15. Use of macromolecules in a liquid film of an ionic liquid comprising the macromolecules as a marker for the investigation of the dynamic/fluidic behavior of the ionic liquid by TEM or SEM.
